# FASCICULE DE BREVET EUROPEEN

(11) **EP 3 185 389 B1**
(45) Date de publication et mention de la délivrance du brevet: **02.12.2020**
(21) Numéro de dépôt: 16205347.4
(22) Date de dépôt: 20.12.2016
(51) Int. Cl.: H02J 7/34, H02J 1/14

(54) **DISPOSITIF ET APPAREIL ÉLECTRIQUE DE GÉNÉRATION D'UNE TENSION ÉLECTRIQUE À DESTINATION D'UNE UNITÉ DE TRAITEMENT D'INFORMATIONS, SYSTÈME ÉLECTRONIQUE DE TRAITEMENT D'INFORMATIONS ASSOCIÉ**
VORRICHTUNG UND ELEKTRISCHES GERÄT ZUR ERZEUGUNG EINER ELEKTRISCHEN SPANNUNG FÜR EINE INFORMATIONSBEARBEITUNGSEINHEIT, UND ENTSPRECHENDES ELEKTRONISCHES SYSTEM ZUR INFORMATIONSBEARBEITUNG
DEVICE AND ELECTRICAL APPARATUS FOR GENERATING AN ELECTRIC VOLTAGE TO AN INFORMATION PROCESSING UNIT, ASSOCIATED INFORMATION PROCESSING ELECTRONIC SYSTEM

(30) Priorité: 21.12.2015 FR 1502653
(43) Date de publication de la demande: 28.06.2017
(73) Titulaire: Thales, 92400 Courbevoie (FR)
(72) Inventeur: CHIRON, Olivier, 49309 CHOLET (FR); GEAIRON, Sébastien, 49309 CHOLET (FR)
(74) Mandataire: Lavoix

(56) Documents cités:
- WO-A1-2005/039032
- JP-B2- 4 848 453
- US-A1- 2010 264 887
- KEI EGUCHI ET AL: "Design of a Multiple-Input SC DC-DC Converter Realizing Long Battery Runtime", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E93A, no. 5, 1 mai 2010 (2010-05-01), pages 985-988, XP001555382, ISSN: 0916-8508, DOI: 10.1587/TRANSFUN.E93.A.985

## Description

La présente invention concerne un dispositif électrique de génération d'une tension électrique à destination d'une unité de traitement d'informations, pour la sauvegarde d'information(s) lors d'une extinction d'une source principale apte à alimenter électriquement l'unité de traitement d'informations.

L'invention concerne également un appareil électrique de génération de la tension électrique à destination de l'unité de traitement d'informations, pour la sauvegarde d'information(s) lors de l'extinction de la source principale, l'appareil comprenant un tel dispositif électrique de génération, et une pile électrique connectée en entrée du dispositif.

L'invention concerne également un système électronique de traitement d'informations, tel qu'un poste électronique de radiocommunication, le système comprenant une unité de traitement d'informations, une source principale d'alimentation électrique de l'unité de traitement d'informations, et un tel appareil électrique de génération de la tension électrique à destination de l'unité de traitement d'informations, pour la sauvegarde d'information(s) lors de l'extinction de la source principale.

L'invention concerne le domaine des systèmes électroniques de traitement d'informations, par exemple sous forme de cartes électroniques, nécessitant le maintien d'une tension de sauvegarde par pile. Le maintien de cette tension de sauvegarde à l'aide d'une pile permet de sauvegarder des données et/ou de maintenir certaines fonctions, par exemple une fonction d'horloge. Le remplacement de la pile doit ainsi pouvoir être effectué en un temps minimal sans perdre les données sauvegardées et/ou sans arrêter la ou les fonctions concernées.

On connaît alors un appareil électrique de génération d'une tension électrique de sauvegarde, l'appareil comprenant un dispositif électrique de génération du type précité, et une pile électrique connectée en entrée du dispositif. Le dispositif électrique de génération comprend une borne d'entrée apte à recevoir une tension d'entrée, une borne de sortie apte à délivrer une tension de sortie à destination de l'unité de traitement d'informations, une diode connectée électriquement entre la borne d'entrée et la borne de sortie en sens passant depuis la borne d'entrée vers la borne de sortie, et un condensateur relié électriquement à la borne de sortie.

La tension délivrée par la pile électrique en entrée du dispositif de génération diminue au fur et à mesure de l'utilisation de la pile, et au-delà d'une certaine durée de fonctionnement de la pile, la tension de sauvegarde délivrée par le dispositif de génération, à partir de cette tension d'entrée fournie par la pile, devient trop faible pour garantir la sauvegarde des données et/ou le maintien des fonctions concernées.

Il est alors nécessaire de procéder à un changement de la pile, et le condensateur permet alors de délivrer la tension de sauvegarde en la borne de sortie, en particulier pendant le changement de la pile. Le condensateur est généralement une supercapacité, tel qu'un condensateur ayant une capacité supérieure à 100 mF (milli-Farad).

Toutefois, un tel condensateur permet de délivrer la tension de sauvegarde souhaitée pendant une durée généralement très courte, de l'ordre d'une à deux secondes, nécessitant alors un changement particulièrement rapide de la pile en moins d'une à deux secondes, ce qui est très contraignant. Pour augmenter le temps alloué au changement de la pile, il est alors possible d'augmenter la capacité du condensateur, mais cela entraîne une augmentation significative du coût et de l'encombrement du condensateur. Pour augmenter ce temps alloué, il est encore possible d'effectuer le changement lorsque la tension délivrée par la pile est encore relativement élevée, ce qui diminue alors significativement la durée de fonctionnement de la pile.

US 2010/264887 A1 et JP 4 848453 B2 décrivent chacun un dispositif de génération d'une tension électrique.

Le but de l'invention est donc de proposer un dispositif de génération d'une tension électrique de sauvegarde, permettant d'augmenter le temps alloué au changement de la pile, tout en ne dégradant pas la durée de fonctionnement de la pile et en n'utilisant pas un condensateur de capacité bien plus importante.

À cet effet, l'invention a pour objet un dispositif électrique de génération selon la revendication 1.

Le dispositif de génération selon l'invention permet alors, de par la présence du deuxième condensateur et du module de commutation, de délivrer la tension de sortie en la borne de sortie dans la deuxième configuration. Dans cette deuxième configuration, les premier et deuxième condensateurs sont connectés en série l'un de l'autre, ce qui permet alors de doubler la valeur de la tension délivrée en la borne de sortie, par rapport au dispositif de génération de l'état de la technique, sans pour autant nécessiter d'avoir un condensateur ayant une capacité double.

Suivant d'autres aspects avantageux de l'invention, le dispositif de génération est selon l'une quelconque des revendications dépendantes 2 à 6.

L'invention a également pour objet un appareil électrique de génération selon la revendication 7.

L'invention a également pour objet un système électronique de traitement d'informations selon la revendication 8.

Suivant un autre aspect avantageux de l'invention, le système de traitement d'informations est selon la revendication 9.

Ces caractéristiques et avantages de l'invention apparaitront à la lecture de la description qui va suivre, donnée uniquement à titre d'exemple non limitatif, et faite en référence aux dessins annexés, sur lesquels :

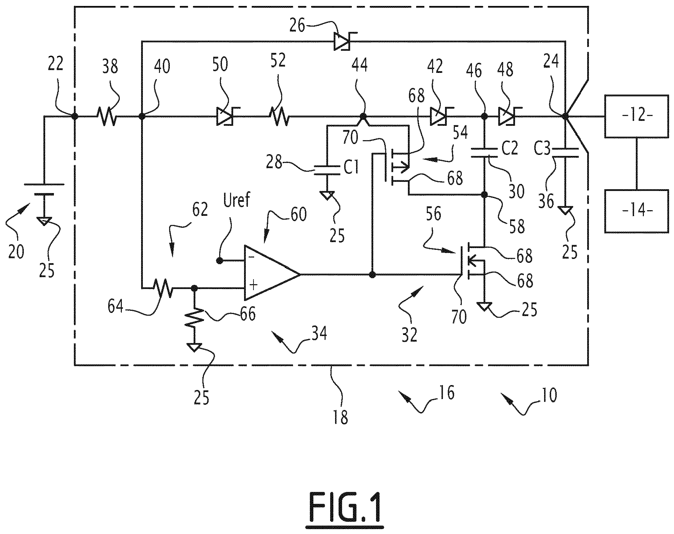

- la figure 1 est une représentation schématique d'un système électronique de traitement d'informations selon l'invention, comprenant une unité de traitement d'informations, une source principale d'alimentation électrique de l'unité de traitement d'informations, et un appareil électrique de génération d'une tension électrique à destination de l'unité de traitement d'informations, pour la sauvegarde d'information(s) lors d'une extinction de la source principale, l'appareil comportant un dispositif électrique de génération de ladite tension électrique à destination de l'unité de traitement d'informations, et une pile électrique connectée en entrée du dispositif ;

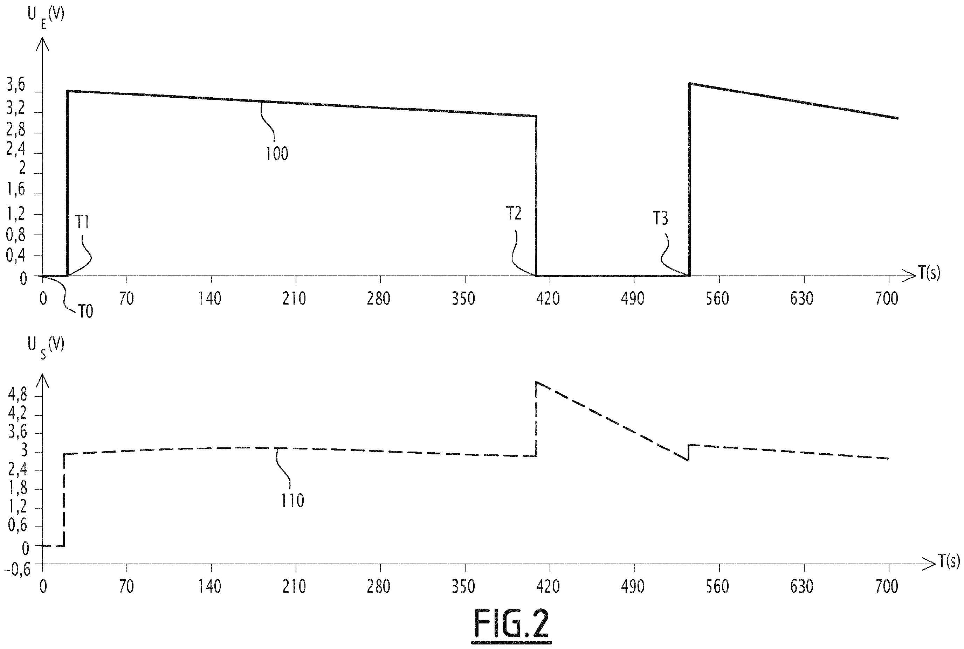

- la figure 2 est un ensemble de deux courbes, une première courbe représentant l'évolution temporelle de la tension en entrée du dispositif de la figure 1 et une deuxième courbe représentant l'évolution temporelle de la tension en sortie dudit dispositif ; et

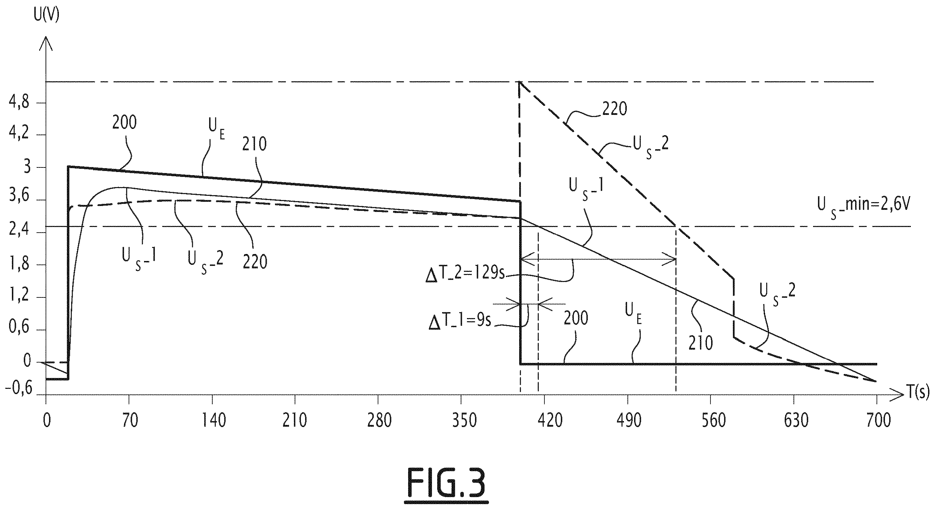

- la figure 3 est un ensemble de trois courbes, une première courbe représentant l'évolution temporelle de la tension fournie par la pile en entrée du dispositif, une deuxième courbe représentant l'évolution temporelle de la tension en sortie du dispositif avec un dispositif de l'état de la technique, et une troisième courbe représentant l'évolution temporelle de la tension en sortie du dispositif avec le dispositif selon l'invention.

Dans la suite de la description, l'expression « sensiblement égal à » définit une relation d'égalité à plus ou moins10%.

Sur la figure 1, un système électronique 10 de traitement d'informations comprend une unité de traitement d'informations 12, une source principale 14 d'alimentation électrique de l'unité de traitement d'informations 12 et un appareil électrique 16 de génération d'une tension électrique Us à destination de l'unité de traitement d'informations 12.

Le système électronique de traitement d'informations 10 est un système électronique nécessitant le maintien d'une tension de sauvegarde entre ses bornes d'entrée, non représentées, pour sauvegarder des données et/ou de maintenir certaines fonctions, par exemple une fonction d'horloge.

Le système électronique de traitement d'informations 10 est, par exemple, un poste électronique de radiocommunication. Le poste électronique de radiocommunication est également appelé station radioélectrique, et est apte à émettre et/ou à recevoir des données par ondes radioélectriques, à destination et/ou depuis un autre poste de radiocommunication.

L'unité de traitement d'informations 12 est, par exemple formée, d'un processeur et d'une mémoire associée au processeur, non représentés. L'unité de traitement d'informations 12 est réalisée sous forme d'une ou plusieurs cartes électroniques, non représentées.

La source principale 14 est connue en soi, et est configurée pour délivrer à l'unité de traitement d'informations 12 une énergie électrique pour l'alimentation électrique des éléments constituant ladite unité de traitement d'informations 12.

La source principale 14 est, par exemple, une source continue apte à délivrer une tension continue à l'unité de traitement d'informations 12. En variante, la source principale 14 est une source alternative apte à délivrer une tension alternative à l'unité de traitement d'informations 12.

L'appareil de génération 16 comprend un dispositif électrique 18 de génération de la tension électrique Us à destination de l'unité de traitement d'informations 12, et une pile électrique 20 connectée en entrée du dispositif 18. La tension électrique Us générée par l'appareil électrique 16 est adaptée pour servir à la sauvegarde d'information(s) en cas d'extinction de la source principale 14.

Le dispositif de génération 18 comprend au moins une borne d'entrée 22 apte à recevoir une tension d'entrée U_{E} et au moins une borne de sortie 24 apte à délivrer en sortie la tension électrique U_{S}, également appelée tension de sortie, à destination de l'unité de traitement d'informations 12. L'homme du métier comprendra alors que le nombre de borne(s) d'entrée 22 et de borne(s) de sortie 24 dépend du type de la tension d'entrée U_{E} et du type de la tension de sortie U_{S}.

Dans l'exemple de la figure 1, la tension d'entrée U_{E} et la tension de sortie Us sont chacune une tension continue, et le dispositif de génération 18 comprend alors deux bornes d'entrée 22 et deux bornes de sortie 24, à savoir une borne positive et une borne négative à chaque fois.

Dans l'exemple de la figure 1, seule la borne positive est représentée pour les bornes d'entrée 22 et les bornes de sortie 24 par souci de simplification du dessin. Chaque borne négative, non représentée, est connectée à un potentiel de référence 25, telle qu'une masse électrique, le potentiel de référence 25 étant symbolisé par un triangle sur la figure 1.

Par convention, dans la suite de la description, lorsqu'il sera fait référence à une borne d'entrée 22 ou de sortie 24 en particulier, la borne considérée sera alors la borne positive pour la tension continue, ou la borne de phase par analogie pour une tension alternative.

Le dispositif de génération 18 comprend une première diode 26 connectée électriquement entre la borne d'entrée 22 et la borne de sortie 24, en sens passant depuis la borne d'entrée 22 vers la borne de sortie 24.

Le dispositif de génération 18 comprend un premier condensateur 28 et un deuxième condensateur 30, chacun étant relié électriquement à la borne de sortie 24. Il comprend en outre un module de commutation 32 configuré pour commuter entre une première configuration dans laquelle les premier et deuxième condensateurs 28, 30 sont connectés en parallèle l'un de l'autre et une deuxième configuration dans laquelle les premier et deuxième condensateurs 28, 30 sont connectés en série l'un de l'autre. Les premier et deuxième condensateurs 28, 30 sont, dans la deuxième configuration, configurés pour délivrer la tension de sortie Us en la borne de sortie 24. Le module de commutation 32 est un module électrique, de préférence un module électronique.

En complément facultatif, le dispositif de génération 18 comprend en outre un module de commande 34 configuré pour commander le module de commutation 32, en fonction de la valeur de la tension d'entrée U_{E}. Le module de commande 34 est un module électrique, de préférence un module électronique.

En complément facultatif, le dispositif de génération 18 comprend en outre un troisième condensateur 36 relié électriquement à la borne de sortie 36. Le troisième condensateur 36 est, par exemple, connecté directement entre la borne de sortie 24 et le potentiel de référence 25.

En complément facultatif, le dispositif de génération 18 comprend une première résistance électrique 38 connectée entre la borne d'entrée 22 et un premier nœud intermédiaire 40, une deuxième diode 42 connectée entre des deuxième 44 et troisième 46 nœuds intermédiaires, et une troisième diode 48 connectée entre le troisième nœud intermédiaire 46 et la borne de sortie 24.

En complément facultatif, le dispositif de génération 18 comprend une quatrième diode 50 et une deuxième résistance 52 connectées en série entre le premier nœud intermédiaire 40 et le deuxième nœud intermédiaire 44.

La pile électrique 20 est connue en soi, et est apte à délivrer une tension continue Uₚᵢₗₑ en la borne d'entrée 22. Lorsque la pile électrique 20 est neuve, la valeur de la tension continue Uₚᵢₗₑ délivrée par la pile 20 en entrée du dispositif de génération 18 est sensiblement égale à 3,6 V.

La pile électrique 20 est considérée comme usée, lorsque la valeur de la tension continue Uₚᵢₗₑ délivrée par la pile 20 est inférieure ou égale à une valeur minimale prédéfinie. Cette valeur minimale prédéfinie dépend de la valeur minimale de la tension de sortie U_{S} devant être fournie à l'unité de traitement d'informations 12, en tant que tension de sauvegarde Uₛₐᵤᵥ. Cette valeur minimale prédéfinie est, par exemple, comprise entre 2,7 V et 2,9 V.

La première diode 26 est par exemple une diode Schottky, comme représenté sur la figure 1.

En variante non représentée, la première diode 26 est réalisée sous forme d'un transistor commandé par une unité de commande. Le transistor est par exemple un transistor à effet de champ, tel qu'un transistor MOSFET (de l'anglais *Metal-Oxide-Semiconductor Field-Effect Transistor*)*.* Lorsque le transistor est commandé en mode passant, le courant circule entre les électrodes de conduction du transistor, le transistor se comportant alors comme une diode en sens passant. Lorsque le transistor est commandé en mode bloqué, le courant ne circule pas entre les électrodes de conduction, une diode interne du transistor empêchant le courant de circuler en sens inverse.

La première diode 26 a une tension de seuil, par exemple sensiblement égale à 0,7 V.

Le premier condensateur 28 présente une première capacité C1, et le deuxième condensateur 30 présente une deuxième capacité C2. Les valeurs des première et deuxième capacités C1, C2 sont, par exemple, chacune supérieure à 10 mF, de préférence encore chacune supérieure à 100 mF. La valeur de la première capacité C1 est par exemple égale à la valeur de la deuxième capacité C2.

Le module de commutation 32 comporte un premier interrupteur 54 connecté entre le premier condensateur 28 et une électrode respective du deuxième condensateur 30, et un deuxième interrupteur 56 connecté à ladite électrode du deuxième condensateur 30, cette électrode du deuxième condensateur 30 correspondant à un quatrième nœud intermédiaire 58. Dans l'exemple de la figure 1, le premier interrupteur 54 est alors connecté entre le deuxième nœud intermédiaire 44 et le quatrième nœud intermédiaire 58, et le deuxième interrupteur 56 est connecté entre le quatrième nœud intermédiaire 58 et la tension de référence 25.

Le module de commutation 32 comporte la deuxième diode 42 connectée entre le premier condensateur 28 et l'autre électrode du deuxième condensateur 30, cette autre électrode du deuxième condensateur 30 correspondant au troisième nœud intermédiaire 46. La deuxième diode 42 est en sens passant depuis le premier condensateur 28 vers le deuxième condensateur 30.

Le module de commande 34 est configuré pour commander le module de commutation 32 en fonction de la valeur de la tension d'entrée U_{E}. Le module de commande 34 est notamment configuré pour commander le module de commutation 32 de la première configuration vers la deuxième configuration lorsque la valeur de la tension d'entrée U_{E} est inférieure à une valeur seuil prédéfinie U_{E_min}.

Le module de commande 34 comporte un comparateur 60, le comparateur 60 étant relié électriquement en entrée à la borne d'entrée 22, d'une part, et à une tension de référence U_{ref}, d'autre part, et en sortie au module de commutation 32. Dans l'exemple de la figure 1, le comparateur 60 est un amplificateur opérationnel dont l'entrée inverseuse est connectée à la tension de référence U_{ref}, et dont l'entrée non-inverseuse est reliée au premier nœud intermédiaire 40 par l'intermédiaire d'un pont diviseur 62 comportant une troisième résistance 64 et une quatrième résistance 66.

Le troisième condensateur 36 est configuré pour délivrer une tension de réserve en présence d'un appel de courant en la borne de sortie 24, notamment lors de la commutation entre la première configuration et la deuxième configuration. Autrement dit, le troisième condensateur 36 forme un condensateur de découplage sur la tension de sortie Us.

Le troisième condensateur 36 présente une troisième capacité C3. La valeur de la troisième capacité C3 est par exemple inférieure à 1 mF.

La deuxième diode 42, la troisième diode 48 et la quatrième diode 50 sont, par exemple, chacune une diode Schottky.

Le premier interrupteur 54 et le deuxième interrupteur 56 comportent chacun deux électrodes de conduction 68 et une électrode de commande 70.

Le premier interrupteur 54 et le deuxième interrupteur 56 sont de préférence configurés pour être commandés en opposition de phase, l'un étant en mode bloqué pendant que l'autre est en mode passant, et inversement. Le premier interrupteur 54 et le deuxième interrupteur 56 sont par exemple des transistors de types distincts, par exemple de type P et de type N. Dans l'exemple de la figure 1, le premier interrupteur 54 est un transistor de type P, et le deuxième interrupteur 56 est un transistor de type N.

Le premier interrupteur 54 et le deuxième interrupteur 56 sont par exemple des transistors à effet de champ, tel que des transistors MOSFET. Les électrodes de conduction 68 sont alors des électrodes de drain et de source, et l'électrode de commande 70 est une électrode de grille.

Le comparateur 60 est connecté en sortie au module de commutation 32. Dans l'exemple de la figure 1, le comparateur 60 est alors connecté en sortie aux électrodes de commande 70 des premier et deuxième interrupteurs 54, 56.

Le fonctionnement du système électronique de traitement d'informations 10 selon l'invention, et plus particulièrement de l'appareil électrique de génération 16, va être à présent expliqué en regard de la figure 2 qui représente des courbes de la tension d'entrée U_{E} et de la tension de sortie U_{S} en fonction du temps.

Initialement, à un instant temporel initial T0, les premier et deuxième condensateur 28, 30, ainsi que le troisième condensateur 36 le cas échéant, sont déchargés et aucune pile 20 n'est installée dans l'appareil de génération 16, de sorte que la tension d'entrée U_{E} et la tension de sortie U_{S} sont nulles, comme représenté sur la figure 2 avec une première courbe 100 correspondant à l'évolution temporelle de la tension d'entrée U_{E} et une deuxième courbe 110 correspondant à l'évolution temporelle de la tension de sortie U_{S}.

La pile 20 est ensuite insérée dans l'appareil de génération 16, et connectée en entrée du dispositif de génération 18 en un premier instant temporel de fonctionnement T1.

En ce premier instant temporel de fonctionnement T1, par exemple 20 secondes après l'instant initial T0 sur la figure 2, la tension d'entrée U_{E} est alors sensiblement égale à 3,6 V correspondant à la tension Uₚᵢₗₑ fournie par la pile 20 lorsque celle-ci est neuve, et un courant électrique circule alors à travers la première résistance 38 et la première diode 26 jusqu'à la borne de sortie 24. La tension de sortie U_{S} est alors sensiblement égale à 2,9 V, la tension de sortie U_{S} correspondant dans ce cas sensiblement à la tension d'entrée U_{E} moins la tension de seuil de la première diode 26.

En ce premier instant temporel de fonctionnement T1, le premier condensateur 28 se charge à partir de la tension d'entrée U_{E} au travers de la première résistance 38, de la quatrième diode 50 et de la deuxième résistance 52.

En ce premier instant temporel de fonctionnement T1, la tension reçue, via le pont diviseur 62 à partir de la tension d'entrée U_{E}, sur l'entrée non-inverseuse de l'amplificateur opérationnel du comparateur 60 est supérieure à la tension de référence U_{ref} reçue sur l'entrée inverseuse dudit amplificateur opérationnel, de sorte que la sortie de l'amplificateur opérationnel est à l'état haut, ce qui commande le premier interrupteur 54 en mode bloqué et le deuxième interrupteur 56 en mode passant. Le deuxième condensateur 30 se charge alors à partir de la tension d'entrée U_{E} au travers de la première résistance 38, de la quatrième diode 50, de la deuxième résistance 52 et de la deuxième diode 42. La troisième diode 48 est alors bloquée.

À partir de ce premier instant temporel de fonctionnement T1 et jusqu'à un deuxième instant temporel de fonctionnement T2, le module de commutation 32 est alors dans sa première configuration dans laquelle les premier et deuxième condensateurs 28, 30 sont connectés en parallèle l'un de l'autre, le premier interrupteur 54 étant en mode bloqué et le deuxième interrupteur 56 étant en mode passant.

Le deuxième instant temporel de fonctionnement T2 correspond à l'instant où la pile électrique 20 est considérée comme usée et doit être retirée pour être remplacée, la valeur de la tension d'entrée U_{E} ayant progressivement diminué au cours du temps entre les premier et deuxième instants temporels de fonctionnement T1, T2. La valeur de la tension continue Uₚᵢₗₑ délivrée par la pile 20 devient en particulier inférieure ou égale à la valeur minimale prédéfinie. Cette valeur minimale prédéfinie est sensiblement égale à 2,9 V dans l'exemple de la figure 2.

Lorsque la pile électrique 20 est retirée de l'appareil de génération 16 en ce deuxième instant temporel de fonctionnement T2, la tension d'entrée U_{E} devient alors nulle, et la première diode 26 est alors bloquée. La deuxième diode 42 et la quatrième diode 50 sont également bloquées.

En outre, la tension reçue, via le pont diviseur 62 à partir de la tension d'entrée U_{E}, sur l'entrée non-inverseuse de l'amplificateur opérationnel du comparateur 60 devient également nulle, et est alors inférieure à la tension de référence U_{ref} reçue sur l'entrée inverseuse dudit amplificateur opérationnel, de sorte que la sortie de l'amplificateur opérationnel passe à l'état bas, ce qui commande le premier interrupteur 54 en mode passant et le deuxième interrupteur 56 en mode bloqué.

À partir de ce deuxième instant temporel de fonctionnement T2 et jusqu'à un troisième instant temporel de fonctionnement T3, le module de commutation 32 est alors dans sa deuxième configuration dans laquelle les premier et deuxième condensateurs 28, 30 sont connectés en série l'un de l'autre, le premier interrupteur 54 étant en mode passant et le deuxième interrupteur 56 étant en mode bloqué.

Dans cette deuxième configuration, les premier et deuxième condensateurs 28, 30 délivrent alors en la borne de sortie 24 la tension de sortie U_{S}, et la tension de sortie Uₛ est plus précisément égale à la somme de la tension aux bornes du premier condensateur 28 et de la tension aux bornes du deuxième condensateur 30.

Dans l'exemple de la figure 2, la tension de sortie U_{S} délivrée via les premier et deuxième condensateurs 28, 30 connectés en série est alors supérieure à 5 V, et est donc très supérieure à la valeur minimale de la tension de sortie U_{S} devant être fournie à l'unité de traitement d'informations 12, en tant que tension de sauvegarde Uₛₐᵤᵥ. Ceci permet alors d'avoir un temps alloué au changement de la pile électrique 20 suffisamment important, sans risquer que la valeur de la tension de sortie U_{S} ne devienne inférieure à la valeur minimale prédéfinie.

Le troisième instant temporel de fonctionnement T3 correspond au moment où une pile électrique 20 neuve est insérée dans l'appareil de génération 16, et le dispositif de génération 18 se retrouve alors dans l'état dans lequel il était au premier instant temporel de fonctionnement T1.

Ainsi, le dispositif de génération 18 selon l'invention permet d'augmenter le temps alloué au changement de la pile 20, tout en ne nécessitant pas de relever la valeur minimale de la tension Uₚᵢₗₑ fournie par la pile 20, valeur minimale en-dessous de laquelle la pile 20 doit être changée.

Avec le dispositif de génération 18 selon l'invention, cette valeur minimale prédéfinie de la tension Uₚᵢₗₑ fournie par la pile 20 est en effet inchangée. Le dispositif de génération 18 selon l'invention ne dégrade alors pas la durée de fonctionnement de la pile 20.

En variante, la valeur minimale prédéfinie de la tension Uₚᵢₗₑ fournie par la pile 20 est même diminuée, ce qui améliore, c'est-à-dire augmente, la durée de fonctionnement de la pile 20.

En outre, le dispositif de génération 18 selon l'invention nécessite seulement d'utiliser le deuxième condensateur 30 dont la deuxième capacité C2 est par exemple sensiblement égale à la première capacité C1 du premier condensateur 28, mais ne nécessite pas d'utiliser un condensateur de capacité bien plus importante. Pour autant, le module de commutation 32 permet, dans la deuxième configuration, d'avoir le premier condensateur 28 et le deuxième condensateur 30 connectés en série, ce qui permet au final de doubler la valeur de la tension résultante délivrée en la borne de sortie 24.

En outre, lorsque la pile électrique 20 est présente en entrée du dispositif de génération 18 et que le module de commutation 32 est dans sa première configuration, les premier et deuxième condensateurs 28, 30 sont alors connectés en parallèle pour que la valeur de chaque capacité C1, C2 à charger ne soit pas trop importante, et ne dégrade pas le fonctionnement du dispositif de génération 18.

Autrement dit, lorsque la pile électrique 20 est connectée en entrée du dispositif de génération 18 et fournit une tension de valeur suffisante pour l'alimentation de l'unité de traitement d'informations 12 via la première diode 26, et que le mode de fonctionnement du dispositif de génération 18 correspond alors à une charge des premier et deuxième condensateurs 28, 30, ceux-ci sont connectés en parallèle pour faciliter leur charge, le module de commutation 32 étant dans sa première configuration.

Ensuite, lorsque la pile électrique 20 est retirée pour être changée, et que les premier et deuxième condensateurs 28, 30 prennent alors la suite de la pile 20 pour délivrer la tension de sortie U_{S} à l'unité de traitement d'informations 12, les premier et deuxième condensateurs 28, 30 sont connectés en série, le module de commutation 32 commutant alors pour passer dans sa deuxième configuration, ceci afin de délivrer une valeur aussi importante que possible de la tension de sortie U_{S}.

Le dispositif de génération 18 selon l'invention permet donc, en cas de retrait de la pile 20, de délivrer une valeur bien plus importante la tension de sortie U_{S} qu'avec le dispositif de génération de l'état de la technique, ceci en supposant bien entendu que les premier et deuxième condensateurs 28, 30 sont chargés, comme cela doit être également le cas avec le condensateur du dispositif de génération de l'état de la technique.

De ce fait, le dispositif de génération 18 selon l'invention permet d'augmenter significativement le temps alloué au changement de la pile 20, par rapport au dispositif de génération de l'état de la technique, comme cela ressort dans l'exemple de la figure 3, décrit ci-après.

Sur la figure 3, une première courbe de résultat 200 correspond à l'évolution temporelle de la tension d'entrée U_{E}, une deuxième courbe de résultat 210 correspond à l'évolution temporelle de la tension de sortie U_{S} délivrée par le dispositif de génération de l'état de la technique, cette tension de sortie étant alors notée U_{S_}1, et une troisième courbe de résultat 220 correspond à l'évolution temporelle de la tension de sortie U_{S} délivrée par le dispositif de génération 18 selon l'invention, cette tension de sortie étant alors notée U_{S_}2.

L'homme du métier notera tout d'abord que la tension d'entrée U_{E} est la même avec le dispositif de génération de l'état de la technique et avec le dispositif de génération 18 selon l'invention, cette tension d'entrée U_{E} dépendant directement de la tension fournie par la pile électrique 20, et la pile électrique 20 étant bien entendu choisie identique en entrée de chaque dispositif de génération pour pouvoir les comparer.

L'homme du métier observera ensuite que, lors du retrait de la pile électrique 20 qui est effectué dans l'exemple de la figure 3 à l'instant correspondant environ à 400 secondes, les condensateurs respectifs s'étant chargés pendant que la pile électrique 20 était connectée en entrée du dispositif de génération respectif, la valeur de la tension de sortie U_{S}_1 délivrée par le dispositif de génération de l'état de la technique est bien plus faible que celle de la tension de sortie U_{S}_2 délivrée par le dispositif de génération 18 selon l'invention.

Plus précisément, la valeur de la tension de sortie U_{S_}1 délivrée par le dispositif de génération de l'état de la technique diminue par rapport à celle qui était fournie lorsque la pile 20 était encore présente, et devient rapidement inférieure à la valeur minimale souhaitée de la tension de sortie, notée U_{S_}min. La différence temporelle, notée ΔT_1, entre l'instant du retrait de la pile 20 et l'instant auquel la valeur de la tension de sortie U_{S_}1 devient inférieure à la valeur minimale de la tension de sortie U_{S_}min est en effet sensiblement égale à 9 secondes.

Il est alors nécessaire, avec le dispositif de génération de l'état de la technique, que le remplacement de la pile 20 soit effectué en moins de 9 secondes, ce qui est particulièrement contraignant. La valeur minimale de la tension de sortie U_{S_}min, par exemple égale à 2,6 V, est en effet ajustée pour que la tension de sauvegarde reste suffisamment importante pour permettre de sauvegarder les données et/ou de maintenir certaines fonctions de l'unité de traitement d'informations 12.

En comparaison, la valeur de la tension de sortie U_{S_}2 délivrée par le dispositif de génération 18 selon l'invention augmente tout d'abord très significativement par rapport à la valeur de la tension de sortie U_{S}_2 qui était fournie lorsque la pile 20 était encore présente, et devient bien plus tardivement inférieure à la valeur minimale de la tension de sortie U_{S}_min. La différence temporelle, notée ΔT_2, entre l'instant du retrait de la pile 20 et l'instant auquel la valeur de la tension de sortie U_{S}_2 devient inférieure à la valeur minimale de la tension de sortie U_{S}_min est alors sensiblement égale à 129 secondes, ce qui permet d'effectuer le changement de la pile 20 en toute tranquillité.

On conçoit alors que le dispositif de génération 18 selon l'invention permet d'augmenter de manière très significative le temps alloué au changement de la pile 20 par rapport au dispositif de génération de l'état de la technique, ce qui facilite grandement le changement de la pile 20, tout en ne dégradant pas la durée de fonctionnement de la pile 20 et en n'utilisant pas un condensateur de capacité bien plus importante.

délivrée par le dispositif de génération 18 selon l'invention, cette tension de sortie étant alors notée U_{S_}2.

L'homme du métier notera tout d'abord que la tension d'entrée U_{E} est la même avec le dispositif de génération de l'état de la technique et avec le dispositif de génération 18 selon l'invention, cette tension d'entrée U_{E} dépendant directement de la tension fournie par la pile électrique 20, et la pile électrique 20 étant bien entendu choisie identique en entrée de chaque dispositif de génération pour pouvoir les comparer.

L'homme du métier observera ensuite que, lors du retrait de la pile électrique 20 qui est effectué dans l'exemple de la figure 3 à l'instant correspondant environ à 400 secondes, les condensateurs respectifs s'étant chargés pendant que la pile électrique 20 était connectée en entrée du dispositif de génération respectif, la valeur de la tension de sortie U_{S_}1 délivrée par le dispositif de génération de l'état de la technique est bien plus faible que celle de la tension de sortie U_{S_}2 délivrée par le dispositif de génération 18 selon l'invention.

Plus précisément, la valeur de la tension de sortie U_{S_}1 délivrée par le dispositif de génération de l'état de la technique diminue par rapport à celle qui était fournie lorsque la pile 20 était encore présente, et devient rapidement inférieure à la valeur minimale souhaitée de la tension de sortie, notée U_{S_}min. La différence temporelle, notée ΔT_1, entre l'instant du retrait de la pile 20 et l'instant auquel la valeur de la tension de sortie U_{S_}1 devient inférieure à la valeur minimale de la tension de sortie U_{S_}min est en effet sensiblement égale à 9 secondes.

Il est alors nécessaire, avec le dispositif de génération de l'état de la technique, que le remplacement de la pile 20 soit effectué en moins de 9 secondes, ce qui est particulièrement contraignant. La valeur minimale de la tension de sortie U_{S_}min, par exemple égale à 2,6 V, est en effet ajustée pour que la tension de sauvegarde reste suffisamment importante pour permettre de sauvegarder les données et/ou de maintenir certaines fonctions de l'unité de traitement d'informations 12.

En comparaison, la valeur de la tension de sortie U_{S_}2 délivrée par le dispositif de génération 18 selon l'invention augmente tout d'abord très significativement par rapport à la valeur de la tension de sortie U_{S_}2 qui était fournie lorsque la pile 20 était encore présente, et devient bien plus tardivement inférieure à la valeur minimale de la tension de sortie U_{S_}min. La différence temporelle, notée ΔT_2, entre l'instant du retrait de la pile 20 et l'instant auquel la valeur de la tension de sortie U_{S_}2 devient inférieure à la valeur minimale de la tension de sortie U_{S_}min est alors sensiblement égale à 129 secondes, ce qui permet d'effectuer le changement de la pile 20 en toute tranquillité.

On conçoit alors que le dispositif de génération 18 selon l'invention permet d'augmenter de manière très significative le temps alloué au changement de la pile 20 par rapport au dispositif de génération de l'état de la technique, ce qui facilite grandement le changement de la pile 20, tout en ne dégradant pas la durée de fonctionnement de la pile 20 et en n'utilisant pas un condensateur de capacité bien plus importante.

## Revendications

1. Dispositif électrique (18) de génération d'une tension électrique (U_{S}) à destination d'une unité de traitement d'informations, pour la sauvegarde d'informations lors d'une extinction d'une source principale apte à alimenter électriquement l'unité de traitement d'informations,
le dispositif (18) comprenant :
- une borne d'entrée (22) apte à recevoir une tension d'entrée (U_{E}) ;
- une borne de sortie (24) apte à délivrer une tension de sortie (U_{S}) à destination de l'unité de traitement d'informations (12) ;
- une diode (26) connectée électriquement entre la borne d'entrée (22) et la borne de sortie (24), en sens passant depuis la borne d'entrée (22) vers la borne de sortie (24) ;
- un premier condensateur (28) relié électriquement à la borne de sortie (24) ;
- un deuxième condensateur (30) relié électriquement à la borne de sortie (24) ; et
- un module de commutation (32) configuré pour commuter entre une première configuration dans laquelle les premier et deuxième condensateurs (28, 30) sont connectés en parallèle l'un de l'autre et une deuxième configuration dans laquelle les premier et deuxième condensateurs (28, 30) sont connectés en série l'un de l'autre,
les premier et deuxième condensateurs (28, 30) étant, dans la deuxième configuration, configurés pour délivrer la tension de sortie (U_{S}) en la borne de sortie (24),
**caractérisé en ce que** le dispositif (18) comprend en outre :
- un module de commande (34) configuré pour commander le module de commutation (32), en fonction de la valeur de la tension d'entrée (U_{E}), le module de commande (34) étant configuré pour commander le module de commutation (32) de la première configuration vers la deuxième configuration lorsque la valeur de la tension d'entrée (U_{E}) est inférieure à une valeur seuil prédéfinie (U_{E_min}).

2. Dispositif (18) selon la revendication 1, dans lequel le module de commande (34) comporte un comparateur (60), le comparateur (60) étant relié électriquement en entrée à la borne d'entrée (22), d'une part, et à une tension de référence (U_{ref}), d'autre part, et en sortie au module de commutation (32).

3. Dispositif (18) selon l'une quelconque des revendications précédentes, dans lequel le module de commutation (32) comporte :
- un premier interrupteur (54) connecté entre le premier condensateur (28) et une électrode respective du deuxième condensateur (30),
- un deuxième interrupteur (56) connecté à ladite électrode du deuxième condensateur (30) et
- une deuxième diode (42) connectée entre le premier condensateur (28) et l'autre électrode du deuxième condensateur (30).

4. Dispositif (18) selon la revendication 3, dans lequel le premier interrupteur (54) et le deuxième interrupteur (56) comportent chacun deux électrodes de conduction (68) et une électrode de commande (70), et le comparateur (60) est connecté en sortie aux électrodes de commande (70) des premier et deuxième interrupteurs (54, 56).

5. Dispositif (18) selon l'une quelconque des revendications précédentes, dans lequel le dispositif (18) comprend en outre un troisième condensateur (36) relié électriquement à la borne de sortie (24),
le troisième condensateur (36) présentant une capacité (C3) de préférence de valeur inférieure à 1 mF.

6. Dispositif (18) selon l'une quelconque des revendications précédentes, dans lequel les premier (28) et deuxième (30) condensateurs présentent chacun une capacité (C1, C2) de valeur supérieure à 10 mF, de préférence de valeur supérieure à 100 mF.

7. Appareil électrique (16) de génération d'une tension électrique (U_{S}) à destination d'une unité de traitement d'informations (12), pour la sauvegarde d'information(s) lors d'une extinction d'une source principale apte à alimenter électriquement l'unité de traitement d'informations (12), l'appareil comprenant :
- un dispositif électrique (18) de génération de la tension électrique (U_{S}) à destination de l'unité de traitement d'informations (12), et
- une pile électrique (20) connectée en entrée du dispositif (18),
**caractérisé en ce que** le dispositif (18) est selon l'une quelconque des revendications précédentes.

8. Système électronique (10) de traitement d'informations, comprenant une unité de traitement d'informations (12), une source principale (14) d'alimentation électrique de l'unité de traitement d'informations (12), et un appareil électrique (16) de génération d'une tension électrique (U_{S}) à destination de l'unité de traitement d'informations (12), pour la sauvegarde d'information(s) lors d'une extinction de la source principale (14),
**caractérisé en ce que** l'appareil (16) est selon la revendication précédente.

9. Système (10) selon la revendication 8, dans lequel le système (10) est un poste électronique de radiocommunication.

## Patentansprüche

1. Elektrische Vorrichtung (18) zum Erzeugen einer elektrischen Spannung (Us) für eine Informationsverarbeitungseinheit zum Speichern von Informationen beim Erlöschen einer Hauptquelle, welche imstande ist, die Informationsverarbeitungseinheit elektrisch zu versorgen,
wobei die Vorrichtung (18) aufweist:
- eine Eingangsklemme (22), welche imstande ist, eine Eingangsspannung (U_{E}) zu erhalten,
- eine Ausgangsklemme (24), welche imstande ist, eine Ausgansspannung (U_{S}) für die Informationsverarbeitungseinheit (12) zu liefern,
- eine Diode (26), welche zwischen die Eingangsklemme (22) und die Ausgangsklemme (24) elektrisch geschaltet ist, in Durchlassrichtung von der Eingangsklemme (22) zu der Ausgangsklemme (24),
- einen ersten Kondensator (28), welcher mit der Ausgangsklemme (24) elektrisch verbunden ist,
- einen zweiten Kondensator (30), welcher mit der Ausgangsklemme (24) elektrisch verbunden ist, und
- ein Schaltmodul (32), welches eingerichtet ist, um zu schalten zwischen einer ersten Konfiguration, in welcher der erste und der zweite Kondensator (28, 30) parallel miteinander verbunden sind, und einer zweiten Konfiguration, in welcher der erste und der zweite Kondensator (28, 30) in Reihe miteinander verbunden sind,
wobei der erste und der zweite Kondensator (28, 30) in der zweiten Konfiguration eingerichtet sind, um die Ausgangsspannung (Us) an der Ausgangsklemme (24) zu liefern,
**dadurch gekennzeichnet, dass** die Vorrichtung (18) ferner aufweist:
- ein Steuermodul (34), welches eingerichtet ist, um das Schaltmodul (32) zu steuern, in Abhängigkeit von dem Wert der Eingangsspannung (U_{E}), wobei das Steuermodul (34) eingerichtet ist, um das Schaltmodul (32) von der ersten Konfiguration in die zweite Konfiguration zu steuern, wenn der Wert der Eingangsspannung (U_{E}) kleiner als ein vordefinierter Schwellwert (U_{E_min}) ist.

2. Vorrichtung (18) gemäß Anspruch 1, wobei das Steuermodul (34) einen Komparator (60) aufweist, wobei der Komparator (60) am Eingang einerseits mit der Eingangsklemme (22) und andererseits mit einer Referenzspannung (U_{ref}) und am Ausgang mit dem Schaltmodul (32) elektrisch verbunden ist.

3. Vorrichtung (18) gemäß irgendeinem der vorherigen Ansprüche, wobei das Schaltmodul (32) aufweist:
- einen ersten Unterbrecher (54), welcher zwischen den ersten Kondensator (28) und eine jeweilige Elektrode des zweiten Kondensators (30) geschaltet ist,
- einen zweiten Unterbrecher (56), welcher mit der besagten Elektrode des zweiten Kondensators (30) verbunden ist, und
- eine zweite Diode (42), welche zwischen den ersten Kondensator (28) und die andere Elektrode des zweiten Kondensators (30) geschaltet ist.

4. Vorrichtung (18) gemäß Anspruch 3, wobei der erste Unterbrecher (54) und der zweite Unterbrecher (56) jeweils zwei Leitungselektroden (68) und eine Steuerelektrode (70) aufweisen und der Komparator (60) am Ausgang mit den Steuerelektroden (70) des ersten und des zweiten Unterbrechers (54, 56) verbunden ist.

5. Vorrichtung (18) gemäß irgendeinem der vorherigen Ansprüche, wobei die Vorrichtung (18) ferner einen dritten Kondensator (36) aufweist, welcher mit der Ausgangsklemme (24) elektrisch verbunden ist,
wobei der dritte Kondensator (36) eine Kapazität (C3) vorzugsweise mit einem Wert kleiner als 1 mF hat.

6. Vorrichtung (18) gemäß irgendeinem der vorherigen Ansprüche, wobei der erste (28) und der zweite (30) Kondensator jeweilig eine Kapazität (C1, C2) mit einem Wert größer als 10 mF, vorzugsweise mit einem Wert größer als 100 mF, haben.

7. Elektrisches Gerät (16) zum Erzeugen einer elektrischen Spannung (U_{S}) für eine Informationsverarbeitungseinheit (12) zum Speichern von Information(en) beim Erlöschen einer Hauptquelle, welche imstande ist, die Informationsverarbeitungseinheit (12) elektrisch zu versorgen, wobei das Gerät aufweist:
- eine elektrische Vorrichtung (18) zum Erzeugen der elektrischen Spannung (Us) für die Informationsverarbeitungseinheit (12) und
- eine elektrische Batterie (20), welche am Eingang der Vorrichtung (18) angeschlossen ist,
**dadurch gekennzeichnet, dass** die Vorrichtung (18) gemäß irgendeinem der vorherigen Ansprüche ist.

8. Elektronisches System (10) zum Verarbeiten von Informationen, welches aufweist eine Informationsverarbeitungseinheit (12), eine Hauptquelle (14) zur elektrischen Versorgung der Informationsverarbeitungseinheit (12) und ein elektrisches Gerät (16) zum Erzeugen einer elektrischen Spannung (U_{S}) für die Informationsverarbeitungseinheit (12) zum Speichern von Information(en) beim Erlöschen der Hauptquelle (14),
**dadurch gekennzeichnet, dass** das Gerät (16) gemäß dem vorherigen Anspruch ist.

9. System (10) gemäß Anspruch 8, wobei das System (10) eine elektronische Funkkommunikationsstation ist.

## Claims

1. Electrical device (18) for generating an electrical voltage (U_{S}) intended for an information processing unit, for backing up information while a main source capable of supplying electrical power to the information processing unit is switched off, the device (18) comprising:
- an input terminal (22) capable of receiving an input voltage (U_{E});
- an output terminal (24) capable of supplying an output voltage (U_{S}) intended for the information processing unit (12);
- a diode (26) electrically connected between the input terminal (22) and the output terminal (24), in the conducting direction from the input terminal (22) towards the output terminal (24);
- a first capacitor (28) electrically connected to the output terminal (24);
- a second capacitor (30) electrically connected to the output terminal (24); and
- a switching module (32) configured to switch between a first configuration, in which the first and second capacitors (28, 30) are interconnected in parallel, and a second configuration, in which the first and second capacitors (28, 30) are interconnected in series,
the first and second capacitors (28, 30) being configured, in the second configuration, to supply the output voltage (U_{S}) at the output terminal (24),
**characterised in that** the device (18) further comprises:
- a control module (34) configured to control the switching module (32) on the basis of the value of the input voltage (U_{E}), the control module (34) being configured to control the switching module (32) from the first configuration to the second configuration when the value of the input voltage (U_{E}) is below a predefined threshold value (U_{E_MIN})·

2. Device (18) according to claim 1, wherein the control module (34) comprises a comparator (60), the comparator (60) being electrically connected at the input both to the input terminal (22) and to a reference voltage (U_{ref}), and at the output to the switching module (32).

3. Device (18) according to either of the preceding claims, wherein the switching module (32) comprises:
- a first switch (54) connected between the first capacitor (28) and a corresponding electrode of the second capacitor (30),
- a second switch (56) connected to said electrode of the second capacitor (30), and
- a second diode (42) connected between the first capacitor (28) and the other electrode of the second capacitor (30).

4. Device (18) according to claim 3, wherein the first switch (54) and the second switch (56) each comprise two conduction electrodes (68) and a control electrode (70), and the comparator (60) is connected at the output to the control electrodes (70) of the first and second switches (54, 56).

5. Device (18) according to any of the preceding claims, wherein the device (18) further comprises a third capacitor (36) electrically connected to the output terminal (24), the third capacitor (36) having a capacitance (C3) preferably of a value less than 1 mF.

6. Device (18) according to any of the preceding claims, wherein the first (28) and
second (30) capacitors each have a capacitance (C1, C2) of a value greater than 10 mF, preferably of a value greater than 100 mF.

7. Electrical apparatus (16) for generating an electrical voltage (Us) intended for an information processing unit (12), for backing up information while a main source capable of supplying electrical power to the information processing unit (12) is switched off, the apparatus comprising:
- an electrical device (18) for generating the electrical voltage (U_{S}) intended for the information processing unit (12), and
- an electrical battery (20) connected at the input of the device (18),
**characterised in that** the device (18) is according to any of the preceding claims.

8. Electronic information processing system (10), comprising an information processing unit (12), a main source (14) for supplying electrical power to the information processing unit (12), and an electrical apparatus (16) for generating an electrical voltage (U_{S}) intended for the information processing unit (12), for backing up information while the main source (14) is switched off, **characterised in that** the apparatus (16) is according to the preceding claim.

9. System (10) according to claim 8, wherein the system (10) is an electronic radio communication station.
